(19) Europäisches Patentamt
European Patent Office
Office européen des brevets

(11) **EP 1 842 631 B1**

(12) **EUROPEAN PATENT SPECIFICATION**

(45) Date of publication and mention
of the grant of the patent:
**19.11.2008 Bulletin 2008/47**

(51) Int Cl.:
***B25J 9/16*** *(2006.01)* *G05B 19/418* *(2006.01)*

(21) Application number: **06112162.0**

(22) Date of filing: **03.04.2006**

(54) **Apparatus and method for automatic path generation for an industrial robot**

Vorrichtung und Verfahren zur Bahnerzeugung für einen Industrieroboter

Dispositif et méthode de génération de trajectoire pour un robot industriel

(84) Designated Contracting States:
**AT BE BG CH CY CZ DE DK EE ES FI FR GB GR
HU IE IS IT LI LT LU LV MC NL PL PT RO SE SI
SK TR**

(43) Date of publication of application:
**10.10.2007 Bulletin 2007/41**

(73) Proprietor: **ABB Research Ltd
8050 Zürich (CH)**

(72) Inventors:
• **Lindström, Tore
753 12 Uppsala (SE)**
• **Qi, Levi-LiWei
No.31, Fu Te Dong San Rd.
200131 Shanghai (CN)**
• **Qian, ZhaoPing
200031 Shanghai (CN)**
• **Liberg, Anna
722 19 VÄSTERAS (SE)**
• **Gan, Zhongxue
No. 31, Fu Te Dong San Rd.
200131 Shanghai (CN)**

(74) Representative: **Reyier, Ann-Mari et al
Bjerkéns Patentbyra KB
Box 128
721 05 Västeras (SE)**

(56) References cited:
**US-A- 5 530 791 US-A1- 2003 120 391
US-B1- 6 292 715**

**Description**

FIELD OF THE INVENTION

The present invention relates to an apparatus and a method for automatic path generation for an industrial robot working in a work cell including one or more workstations and the robot is visiting and performing work on the workstations.

The invention is useful for off-line simulation and/or programming of any type of industrial application including a robot in a work cell having one or more workstations. For example, the invention is useful for industrial applications in which the robot is tending a machine, such as an injection-moulding machine, a die-casting machine, a metal press machine, a CNC machine, etc.

PRIOR ART

The present invention relates to an apparatus and a method for automatic path generation for an industrial robot working in a work cell including one or more workstations and the robot is visiting and performing work on the workstations.

The invention is useful for off-line simulation and/or programming of industrial applications including a robot in a work cell having one or more workstations. For example, the invention is useful for industrial applications in which the robot is tending a machine, such as an injection-moulding machine, a die-casting machine, a metal press machine, a CNC machine, etc.

Industrial robots are highly flexible devices used for varies operations in many different industrial applications. A common application for industrial robots involves picking objects from a first workstation, moving the objects to a second workstation and placing them there. For example, the first workstation may include an injection-moulding machine, and the second workstation may include a conveyer. The robot is then used for pulling out a moulded object from the injection-moulding machine, moving it to the conveyer and placing the object on the conveyer.

Existing practice for programming a robot involves teaching the robot with a sequence of target points. The target points can be formed as a path, which the robot shall follow during operation. A target point includes three-dimensional position and orientation information. For example, the robot is taught how to perform the task by being guided through the various target points along the desired operating path during the programming.

Industrial robots are conventionally programmed via a robot programming language that is very similar to conventional computer programming languages. The programming of robots is a time consuming process and the conventional methods of using the robot during the programming and teaching process ties up the production equipment and delays production start. In order to save time and speed production start, it is highly desirable to program a robot off-line. Conventionally, this is done through an off-line graphical simulation. The simulation contains a representation of the robot geometric model and its environment as well as a graphical means of teaching target points and paths and recording the operations and movements of the robot.

The graphical simulation provides a much more natural and easy method for programming and visualizing an industrial robot, without tying down the actual equipment. In addition, the graphical environment allows an independence from the robot programming language used by the robot manufacturer. The output from the simulation is a graphical representation of what the robot should do during operation and the real robot program. When the simulation and off-line programming is completed, the program can be transferred to the real robot and let the robot run the program after necessary calibration.

Document US-B1-6 292 715 discloses a system for generating a robotic process plan for performing a process on a workpiece by a robot. Welding is described in detail as an exemplary robotic operation. The system comprises a user interface for receiving input identifying a template corresponding to a plurality of geometric features of the workpiece, each geometric feature associated with one or more robotic process elements. The system also comprises a processor and a software environment operable to process this data. A template includes path planning information and a process plan for the specific geometric work process represented by the template. A plurality of templates describing how the process would be carried out are applied to a geometric feature of the workpiece. Workpiece and work cell geometric (CAD) data is also input to the system. Then the system automatically generates a robotic process plan, including movement paths. Thus, in US-B1-6 292 715 path information is in fact stored in relation to the workpiece.

Conventional off-line simulating and programming of the robot demand input of target points and specifying of the path to be followed by the robot during its operation. This requires knowledge of the robot as well as of detailed procedures of operating off-line programming tool. It is also time-consuming to input all the target points. Existing off-line simulating and programming tools are also difficult to learn and often have a complex user interface. Studies have shown that the typical users of simulating and programming tools are skilled process and sales engineers, not salesmen. However, there is a desire among sales people to have an off-line simulating and/or programming tool that is easy and rapid to use and thereby makes it possible for them to quickly respond to customer's requirement. In particular, for machine-tending application there is an aim at facilitating and accelerating built up of a virtual machine-tending cell.

OBJECTS AND SUMMARY OF THE INVENTION

One object of the present invention is to provide a solution, which alleviates the problems mentioned above, and thus makes it possible for people, who are not skilled engineers, to quickly and easily generate target points and form those target points as paths for an industrial robot performing work in a work cell.

According to one aspect of the invention, this object is achieved by an apparatus comprising the characterizing features of claim 1.

Such an apparatus comprises: a graphical display device, user input means for entering data to the apparatus, a memory location for storing a set of predefined workstation types, each workstation type including at least one predefined movement path including two or more target points, information on how to generate said target points based one or more geometric parameters, and information on how to generate a parameter driven 3D geometric model of the workstation type based on said geometric parameters, a graphical generator adapted to generate a graphical user interface on said display device, displaying information about the predefined workstation types including said geometric parameters and allowing a user to select one or more workstations based on the predefined workstation types and to enter values for said geometric parameters for the selected workstations, a geometric model generator adapted to generate 3D geometric models for the selected workstations based on the workstation type and values of said geometric parameters, a target generating module adapted to calculate the positions of the predefined target points of the selected workstations based on the workstation type and values of said geometric parameters, and a path generating module adapted to generate paths for the selected workstations based on the workstation type and the calculated positions of the target points.

According to the invention, target points are calculated based on geometric parameters of predefined workstation types. For example, the geometric parameters are the height, width and length of the workstation. The geometric model is a parameter driven model and the parameters of such a model are generally denoted driven parameters. When the target points have been calculated, the paths are automatically generated based on the calculated target points and the predefined workstation type. Only limited input from the user is requested, such as selection of workstations and input of geometric parameters for the workstations. The robot path is automatically generated based on those limited inputs. There is no need to input any target points or teach the paths. Therefore, the apparatus according to the invention is very easy to learn and easy and fast to use.

The invention enables a person, who is not a skilled engineer, to quickly and easily generate 3D geometric models of selected workstations, to generate robot targets, and thus form those targets as paths for an industrial robot performing work in a work cell. The first benefit doing so is to greatly reduce the difficulty of creating a 3D virtual material handling cell that makes it practical for sales men to use robot simulation tool directly. The second benefit is that since geometric models of the workstations can be generated automatically with driven parameters, and hence robot targets and paths can be created in an automatic way, the workstations can instantly be regenerated with updated driven parameters of the geometric model. This greatly reduces the time of cell setting up and tuning.

Robots are usually placed in work cells in order to facilitate the automation of a complex series of actions. The work cell usually includes a number of different workstations. A workstation is a physical location on which the robot may carry out work. Each predefined workstation represents a real workstation and a defined task to be carried out by the robot at the workstation. Examples of workstations are: an injection mould machine, a die casting machine, a scrap station for throwing away rejected objects, a device for vision check of the object, one or more stations for subsequent treatment of the object, and an output station such as a conveyer. Examples of tasks are: pick a moulded object from the mould, throw the object in the waste basket, hold the object during a vision check, move the object in a predefined way in relation to a treatment tool, put the object in an assembly with other objects, place the object on the conveyer.

The geometric model of each workstation type is a parameter driven model (PDM). This means that the user only needs to input some necessary driven parameters, in this case geometric parameters, in order to generate a 3D geometrical model of the workstation. For example, the 3D geometric model of a workstation will be generated in the way of organizing different building units, such as box, cylinder, as meaningful assembly for a workstation. It is possible to change one or more of the driven parameters to update the complete 3D geometric model.

The predefined target points are specified in relation to the outer periphery of the workstations. The geometrical model defines, together with its parameters, the outer periphery of the workstation, and thereby the positions of the target points.

The predefined target points for a workstation represent one or more paths to be followed by the robot while carrying out the defined task. For example, a workstation may have a first path for entering the workstation, a second path for carrying out the task, and a third path for leaving the workstation. The predefined paths contain the order of the target points, i.e. in which order the robot shall pass through the target points. Knowing the positions of the target points and the order of the points it is possible to generate the path.

According to an embodiment of the invention, said graphical user interface is adapted to allow a user to change the values of said geometric parameters, and said geometric model generator is adapted to generate new updated 3D geometric models, said target generating module is adapted to generate new updated target points, and said path generating module is adapted to generate new updated paths upon change of any of the geometric parameters. Thus, geometric models, target points and paths are automatically updated when any of the geometrical parameters are updated. The predefined target points are specified in relation to the 3D geometric model of the workstation. When the dimensions of the geometric model are changed, due to change of the geometric parameters, the positions of the target points have to be changed accordingly. This embodiment makes it possible for the user to adjust the geometric parameters of the workstations and almost immediately view the result on display device, and thereby to adjust the parameters until a satisfying result is achieved. This embodiment also makes it easy for the user to generate new paths when the geometry of a workstation is changed. If the apparatus is used for simulation purpose, it is easy to simulate the work cell for workstations of various dimensions.

According to an embodiment of the invention, aid graphical generator is adapted to generate a view including graphical representations of said selected workstations based on the generated 3D geometric models, generate graphical representations of said generated paths, and their positions relative to the workstations, and to display the view on said graphical display device. This embodiment makes it possible for a user to view the workstations and the robot paths in a true relation to each other, and if the user adjusts any of the parameters, it is possible to immediately view the change of workstation and the corresponding change of the path.

According to an embodiment of the invention, the apparatus further comprises a simulator unit adapted to simulate the movements of the robot in the work cell based on said generated paths, and said graphical generator is adapted to display the simulated robot movements on said graphical display device. This embodiment provides a fast and easy way to set up a virtual work cell, for example for a feasibility study. This embodiment allows a person, for example a sales person, with no experience of robot simulation tools, to create a 3D robot virtual cell in less than one hour based on customer criteria. This embodiment of the invention is particularly useful as a sales tool.

According to an embodiment of the invention, the apparatus comprises a robot program generator adapted to generate a robot program for performing work in the work cell based on said generated paths for the selected workstations. This embodiment of the invention offers an easy and fast way to program a robot, and does not require any knowledge about robot program languages. It is easy for the user to reprogram the robot by changing the configuration of the workstation by changing its graphical parameters.

According to an embodiment of the invention, said graphical user interface is adapted to allow a user in a guided way to specify the order in which the robot shall visit the selected workstations, and the robot program generator is adapted to generate the robot program based on the order in which the robot shall visit the workstations. The user creates a robot program by selecting one or more workstations from the predefined set of workstations and specifying the order in which the robot shall visit the selected workstations. This allows the user to create a graphical representation that reflects the configuration of the real work cell.

According to an embodiment of the invention, said graphical generator is adapted to build up a virtual work cell based on the generated 3D geometric models and to display the virtual work cell on said graphical display device. For instance, the graphical generator is adapted to display the robot carrying out the simulated movements in said virtual work cell. This embodiment also provides an easy and fast way to create 3D geometrical models, i.e. PMD models, for commonly used workstations and to build up a virtual work cell, which is displayed on the display device. This is for example advantageous in a sale situation, where the customer is interested in having a view of a possible future work cell and can see the geometric model change instantly.

According to an embodiment of the invention, the graphical user interface is adapted to allow the user to adjust the position of a workstation relative to the other workstations and said graphical generator is adapted to display the new positions of the workstation and the new positions of the paths of the workstation. When the workstation is moved, for example by drag and move, the paths of the workstations are moved together with the workstation since all targets and path are automatically bonded with the geometric model. This embodiment offers a possibility for the user conduct a reachability check. For example, if the robot can't reach all target points, this embodiment allows the user to move the workstations in order to find positions for the workstations where all target points are reachable.

According to an embodiment of the invention, said graphical generator is adapted to generate a graphical user interface comprises a wizard for guiding the user to input necessary data. The combination of a wizard and parameter driven models provide both forwards and backwards steps during configuration of the work cell. The unique part is the wizard organizing other cell set up technologies in such a way which makes it much more powerful than a simple undo/redo button on an editor. This embodiment makes it easy and fast for the user to create 3D geometrical models, targets and paths for the workstations and thereby to set up a virtual work cell.

According to an embodiment of the invention, said workstations include a plurality of different types of material handling machines. The invention is, for example, useful for material handling applications, i.e. when the work cell includes a material-handling machine. Today, there exist no simulation tools especially for material handling application.

According to one aspect of the invention, this object is achieved with a method as defined in claim 13.

Such a method comprises: storing a set of predefined workstation types, each workstation type including at least one predefined movement path including two or more target points, information on how to generate said target points based one or more geometric parameters, and information on how to generate a parameter driven 3D geometric model of the workstation type based on said geometric parameters, displaying information about the predefined workstations including said geometric parameters and allowing a user to select one or more of the predefined workstations and to enter values for said geometric parameters, receiving information about which of the predefined workstations the user has selected and values for said geometric parameters, generating a 3D geometric model for each of the selected workstations based on the workstation type and values for said geometric parameters, calculating the positions of the predefined target points of the selected workstations based on the workstation type and values for said geometric parameters, and generating paths for the selected workstations based on the workstation type and the calculated positions of the target points.

It is easy to realize that the method according to the invention, as defined in the appended set of method claims, is suitable for execution by a computer program having instructions corresponding to the steps in the inventive method when run on a processor unit.

According to a further aspect of the invention, the object is achieved by a computer program product directly loadable into the internal memory of a computer or a processor, comprising software code portions for performing the steps of the method according to the appended set of method claims, when the program is run on a computer. The computer program is provided either on a computer-readable medium or through a network, such as the Internet.

According to another aspect of the invention, the object is achieved by a computer readable medium having a program recorded thereon, when the program is to make a computer perform the steps of the method according to the appended set of method claims, and the program is run on the computer.

BRIEF DESCRIPTION OF THE DRAWINGS

The invention will now be explained more closely by the description of different embodiments of the invention and with reference to the appended figures.

Fig. 1        shows a block diagram of an apparatus for automatic path generation according to an embodiment of the invention.

Figs. 2a-b    show a flow diagrams of a method for path generation according to an embodiment of the invention.

Fig. 3        shows an example of a view for selecting workstations of the work cell displayed on the user interface.

Fig. 4        shows an example of a virtual work cell created by the apparatus according to the invention.

Fig. 5        shows an example a 3D geometric model generated based on a selected workstation type.

Fig. 6        shows another example of a virtual work cell created by the apparatus according to the invention.

Fig. 7        shows the same work cell as shown in figure 5 when one of the parameters of the workstation has been adjusted.

Fig. 8        shows an example of a view showing targets and path for the work cell.

DETAILED DESCRIPTION OF PREFERRED EMBODIMENTS OF THE INVENTION

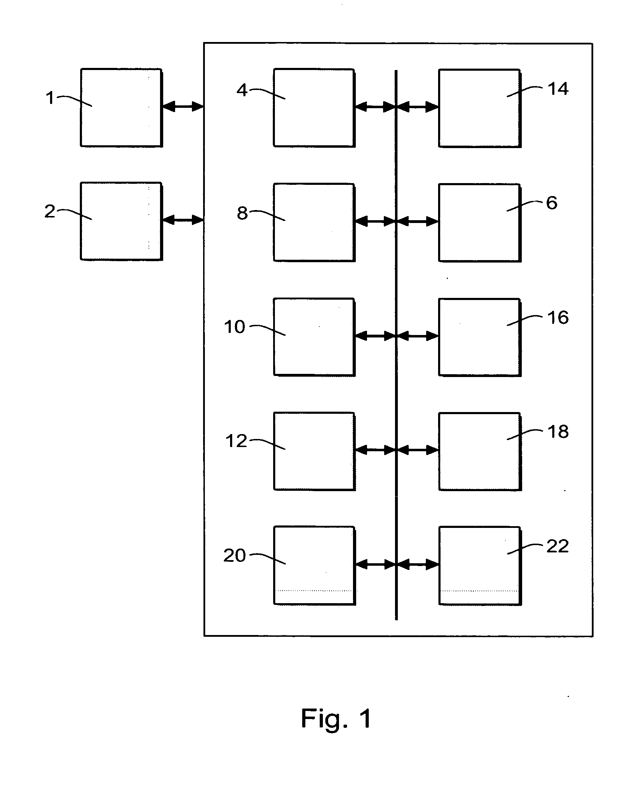

Figure 1 shows a block diagram of an apparatus for automatic path generation according to an embodiment of the invention. The apparatus comprises a graphical display device 1, such as a graphical screen, and user input means 2 for entering data to the apparatus. The graphical display device is, for example, a touch screen, which makes it possible for the user to interact with the apparatus via the screen. However, in another embodiment the input means 2 could be a keyboard, and a pointing device, for instance a mouse, of an ordinary computer, such as a personnel computer (PC). The apparatus includes a plurality of software modules and hardware for execution of the software modules. The hardware of the apparatus is, for example, an ordinary computer. The apparatus includes a memory location 4 for storing information on workstation types and other data, and processor means 6 for execution of the program modules.

A library including a set of predefined workstation types is stored in the memory location 4. For example, the predefined workstation types include a plurality of different types of molding machines, a scrap bin, a conveyer and a sensor. The predefined work station types includes at least one predefined movement path including two or more target points, information on how to generate said target points based one or more geometric parameters, and information on how to generate a parameter driven 3D geometric model of the workstation type based on said geometric parameters. A predefined workstation represents a task that a robot shall carry out on a physical workstation. The predefined paths are the paths to be followed by the robot when performing the predefined task at the workstation. The predefined movement path includes a plurality of target points, default positions and orientations for the target points, the order which the robot shall visit the target, and the path between the target points. The predefined movement path may also include data for speed, type of movement, and robot tool to be used.

The geometric model is a 3D model of the physical workstation and usually includes 2-7 parameters dependent on the station type. The workstation types provided in the library are commonly used robot workstations. The parameters are common graphical parameters, such as height, width and length of the workstation. The information on how to generate a parameter driven 3D geometric model includes a mathematical description of the geometry of the workstation. The memory location 4 may also include a set of predefined robot types including 3D geometrical models of the robot types.

The geometrical models of the workstations are parameter driven models (PDM), which means that only necessary geometric parameters need to be entered by the user. A 3D geometrical model of a specific station type will be generated automatically. Each station PDM model has a set of default parameters. Together with the PDM, robot targets and paths are generated by driven parameters automatically for the station. The targets and paths are designed in dependence on how the robot will tend this workstation in the real world. It is possible to modify a stations geometrical model by modifying its driven parameters. Once any of the parameters is changed, the targets and paths are updated in order to make them align with the geometrical model. In an alternative embodiment, it is also possible to import standard CAD model, other than PDM. In this case, the apparatus can not generate related targets and paths automatically. Instead, the user has to do that by himself.

The apparatus comprises a graphical generator 8 for generating a graphical user interface to be displayed on the display device 1. The graphical user interface is adapted to display information about the predefined workstation types included in the library and allowing a user to choose between the predefined workstation types, and to specify the order in which the robot shall visit the selected workstations. The graphical user interface is also adapted to allow a user to enter values of the geometric parameters for the selected workstations. The apparatus according to the invention makes it possible for the user to select workstations from the library of predefined workstation types. Specify the order in which the robot shall visit the workstations during a work cycle and thereby to create a desired work cell. For implementation of the graphical generator, any commercially available program for generating graphics can be used.

The apparatus comprises a plurality of software modules for carrying out the functions of the apparatus. In the following, the software modules of the apparatus will be described in more detail. Some of the software modules included in this embodiment example are optional.

A target-generating module 10 is adapted to calculate the positions of the predefined target points of selected workstations based on the workstation type and values for the geometric parameters. Either the values of the geometric parameters are default values for the workstation type or user entered values. The user is allowed to change the default values of the parameters.

A path-generating module 12 is adapted to automatically generate paths for the selected workstations based on the workstation type and the calculated positions of the target points. A target includes a position and an orientation. The target-generating model 10 and the path-generating module 12 are adapted to generate new updated target points and paths when the user changes the value of one or more of the geometric parameters.

A simulator unit 14 is adapted to simulate the movements of the robot in the work cell based on the generated paths and workstation type. The simulator unit is for example a virtual robot controller or any other known type of simulator used for offline simulation of an industrial robot. The simulation unit is optional.

A robot program generator 16 is adapted to generate a robot program for performing work in the work cell based on the stored information about the workstation types, the generated path for the selected workstations, and the order, specified by the user, in which the robot shall assist the workstations. The robot program generation is done by any known robot program generator. For example, the robot program is created based on predefined robot code for each selected workstation. The program generator is optional.

A geometric model generator 18 is adapted to generate a 3D geometric model for each of the selected workstations based on the workstation type and values for the geometric parameters. For example, the model-generating module generates CAD models, and in particular parameter driven 3D CAD models. The generated geometric models are used together with the geometrical model of the selected robot type to build up a virtual work cell. When the user changes the values of the geometric parameters for any of the selected workstations, the model generating model automatically generates a new updated geometric model for the workstation.

When the robot reaches a target, it can have different combinations of the turning angle of its axes. This is called a robot configuration. In order to make the robot to go through all paths, a right configuration should be chosen for each target in order to ensure that the robot can go through all targets sequentially.

A robot configuration module 20 is adapted to automatically choose robot configurations along all the paths of the selected workstations. Thus, the apparatus can automatically choose robot configuration for each robot target within a path. The robot configurations for the path are determined dynamically. The automatic robot configuration chosen comprises: get possible configurations of the robot at each robot target first, then regard this as an input to run configuration chosen model to chose configuration for each target. The rule for choosing is that each robot joint should not turn too much, preferably less than 90 degrees, when the robot moves from one target to another. The simulation unit 14 is adapted to simulate movement of the robot based on the chosen robot configurations and the robot program generator 16 is adapted to generate the robot program based on the chosen robot configurations. The robot configurations are automatically chosen for all paths within the work cell. This means that the user does not need to spend time and effort on selection of robot configurations. If the robot cannot reach a target point, it is not possible to find a suitable robot configuration the target point. Thus, it possible to find out if the robot can reach all target points. The robot configuration module 20 is optional.

A reachability-verifying module 22 is adapted to check whether the robot can reach all the target points in the work cell and to notify the user if any of the target points is not reachable for the robot. The reachability-verifying module 22 is based on the result from the robot configuration module 20. If it is not possible to choose a robot configuration for a target point it does mean that it is not possible to reach the target point. The reachability-verifying module makes it possible to ensure that the created work cell is workable. The user is given an opportunity to adjust the positions of the workstations, thereby to create a work cell where the robot can reach all the target points and thus to accomplish the desired tasks. The reachability-verifying module 22 is optional.

The present invention is based on technologies described in the international patent applications PCT/SE2005/001676 and PCT/SE2005/001512 not yet published and hereby incorporated by reference.

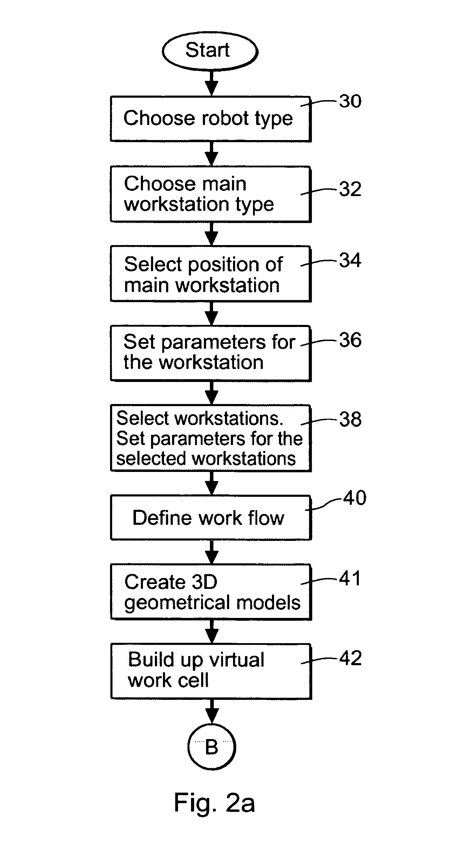

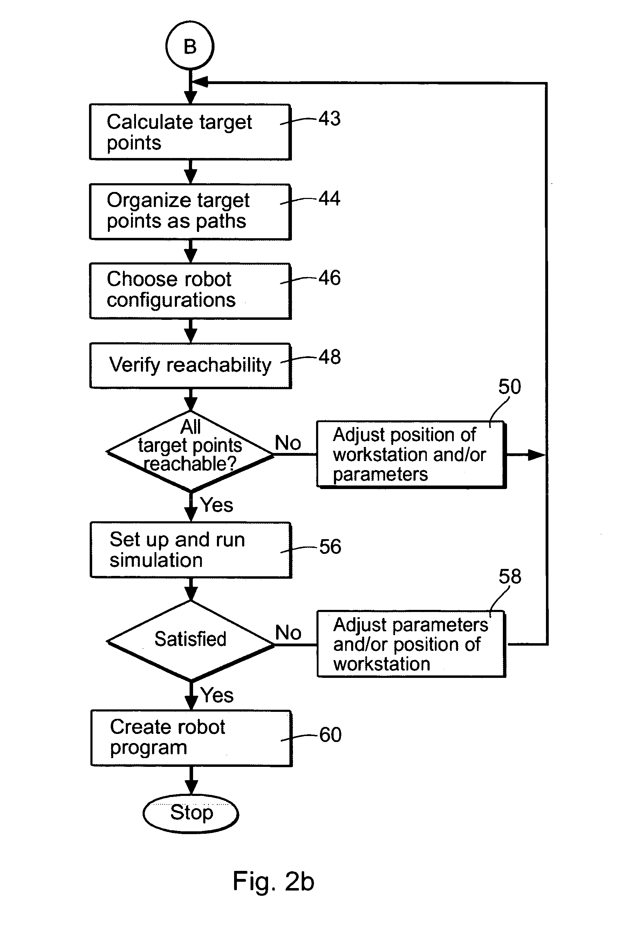

Figures 2a-b are flow diagrams illustrating a method and a computer program according to an embodiment of the present invention. It would be understood that each block of the flow diagram could be implemented by computer program instructions, which are executed by the processing mean 6. In the embodiment disclosed, the generated paths are used for simulating the work cell and for generating program code for the robot. However, in another embodiment it is possible to either simulate the work cell or generate program code for the robot.

In a first step a work cell is built up in three layers: a cell comprising several workstations, the workstation comprising one or more robot paths and a path comprising a plurality of target points. The graphical user interface can be displayed as a wizard that guides the user through the process of building the work cell. To begin with, the user must choose robot type. The user can choose between several predefined robot types displayed on the user interface, block 30. Thereafter, the user chooses the main workstation type, i.e. the machine to be tended by the robot, block 32. For example, the user may choose between different types of injection moulding machines. When the user has selected the main workstation type, the position of the main workstation has to be selected, block 34. For example, the user is allowed to select between one or more predefined positions of the main workstation. For instance, there are three predefined positions of the robot relative to the main workstation: robot face workstation; robot beside workstation; robot on top of workstation. The user can choose one of these three choices and can change the position of either the robot or the main station by dragging and moving of the 3D geometrical model in the 3D view. The positions of the other workstation relative to the robot is either predefined or the user can set the positions of the other workstations relative to the robot on his own in the 2D view within the wizard by drag and drop 2D station icons. Later, when all the workstations 3D models are created in the 3D view, there is also possible to change the position of each station by drag and move the 3D model in the 3D view.

When the main station has been selected, the parameters for the main workstation have to be set, block 36. The parameters are set via the graphical user interface. Preferably, all the predefined workstation types are provided with default values for the geometric parameters and the user is allowed to enter new values for the parameters or to modify the default parameters through the graphical user interface if desired. When the main workstation has been selected and set up, the other workstations in the work cell are selected and the default parameters for the selected workstations are adjusted, block 38. In order to complete the work cell, the user has to define the workflow, i.e. the order in which the robot shall visit the workstations during the work cycle, block 40.

The next step is to create a virtual work cell. This is done by creating a 3D geometric model for each of the selected workstations, block 41. The 3D geometric models are generated based on the present geometric parameters and information stored for the workstation type. If the user has adjusted the value of any of the parameters, the adjusted parameters are used to generate the geometric model; otherwise, the default values are used. Based on the created 3D geometric models, a virtual work cell is built up, block 42. The virtual work cell includes all the selected workstations and the robot. The virtual work cell is displayed on the display device 1.

The next step is to calculate the target points for all workstations, block 43. The target points are calculated based on predefined equations for the selected workstation type the present values for the geometric parameters. When all the target points has been calculated, they are organized as paths based on predefined path organizing rules, block 44. The path organizing rules depend on the workstation type.

When all target points have been organized into paths, it is possible to choose robot configurations along the paths, block 46. This is done by running the robot configuration module 20. When the robot configuration module is run the reachability of the target points are also verified, block 48. The user is notified about the result of the reachability verification. If any of the target points are not reachable, the user is notified accordingly and the user may choose to adjust either the position of the workstation and/or any of the parameters of the workstation, block 50. If any of the geometric parameters has been adjusted, the target points are recalculated and organized as paths, new robot configurations are chosen, and the reachability are verified again. If only the position of the workstation is adjusted, there is no need to recalculate the target points or to generate new paths. Thus, it is possible for the user to continue to adjust the positions of the workstations and/or adjust the parameters until all target points are reachable.

When all target points are reachable, it is possible to set up and run the simulation, block 56. During simulation, the displayed robot is moved along the generated paths for each workstation and moved between the workstations according to the specified order. If the user is satisfied with the result of the simulation, he can go on to the next step and create a robot program, block 60. If the user is not satisfied with the result of the simulation, it is possible to adjust the geometric parameters of the workstations and/or the position of the workstations, block 58. If any of the parameters of the workstation has been adjusted, the target points are calculated again and organized as new paths, new geometric models are created, a new virtual work cell is built up, a and new simulation is run. This can be repeated until the user is satisfied with the simulation result.

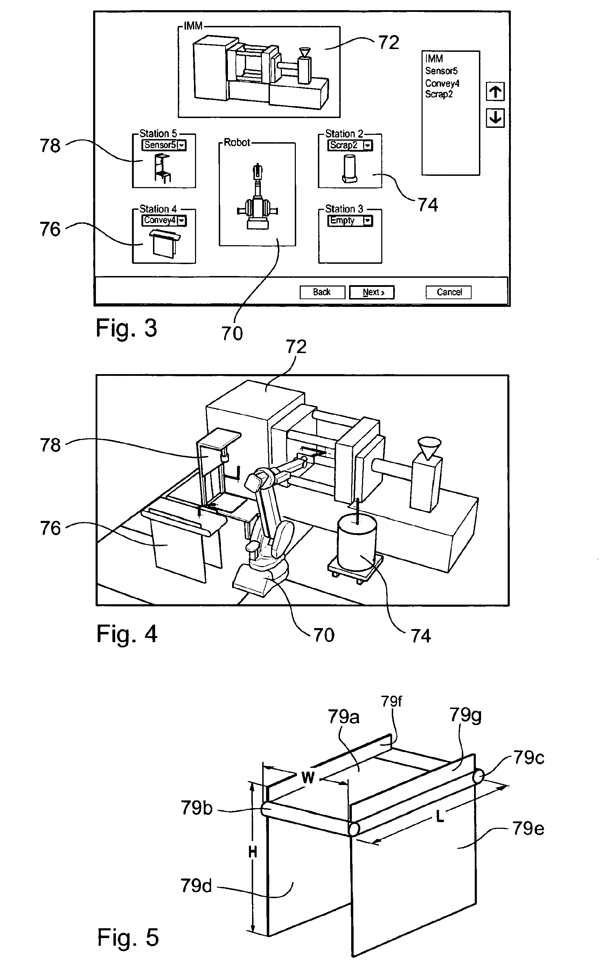

Figure 3 shows a 2D view in a virtual robot cell setup wizard. The view includes a robot 70, a main workstation 72, three workstations: a scrap bin 74, a conveyer 76, and a sensor 78. Those are the components of the work cell and are selected by the user. The procedure of creating a virtual robot work cell in a guided way by the wizard comprises: select robot type, select main machine type, select the position of the robot in relation to the main machine, select workstation type for each predefined position, define workflow, create virtual robot cell in 3D view, adjust 3D model parameters, position of workstation model, and setup and run simulation. Figure 4 shows a 3D virtual work cell created based on user selections of figure 3.

The simulation includes download all information to the virtual robot controller. The wizard guides a user through every step of the configuration of the virtual work cell. The combination of a wizard and parameter driven models provide both forwards and backwards steps of the configuration. The unique part is the wizard organizing other work cell set up technologies in such a way which makes it much more powerful than a simple undo/redo button on an editor.

It is possible to adjust the parameters to update the 3D geometric model before and/or after the 3D geometric model is created. Advantageous with the invention is that a user can simply adjust the parameters to update the 3D geometric model automatically, which significantly reduce the time for creating the 3D geometric model.

Figure 5 illustrates how a 3D geometrical model of a conveyer is generated based on a predefined conveyer type. The conveyer model includes a box 79a, two cylinders 79b-c, and four boxes 79d-g.

The memory location includes the following information on how to generate a parameter driven 3D geometric model of the conveyer type:

    1. Parameters:

        L : Length of Conveyor
        W: Width of Conveyor
        H : Height of Conveyor
        Default values: L = 800, W = 300, H = 700

    2. Configuration of Conveyor:

$$\text{Conveyor} = \text{Box1} + \text{cylinder1} + \text{cylinder2} + \text{Box3} + \text{Box4} + \text{Box5} + \text{Box6}$$

Description:

    Box1: plate
    Cylinder1, Cylinder2 : two rollers

Box3, Box4 : two fences
Box5, Box6 : two support

## Box1 = Position + Size

Position(X, Y, Z) = (-L/2, -W/2, -h); h=H/10
Size(L,W,H) = F(L, W, H)

## Cylinder1 = Center + Rotation + Radius + Height

Center = (-L/2, -W/2, -h/2)
Rotation = (- 90°, 0, 0)
Radius = h/2
Height = W

## Cylinder2 = Center + Rotation + Radius + Height

Center = (L/2, -W/2, -h/2)
Rotation = (- 90°, 0, 0)
Radius = h/2
Height = W

## Box3 = Position + Size

Position(X,Y,Z) = (-0.4*L, -W/2, 0)
Size(L,W, H) = F(0.8*L, 5, 50) unit: mm

## Box4 = Position + Size

Position(X,Y,Z) = (-0.4*L, W/2, 0)
Size(L,W, H) = (0.8*L, 5, 50) unit: mm

## Box5 = Position + Size = (X,Y,Z) + (L,W, H)

Position(X,Y,Z) = (-0.4*L, -W/2, - H)
Size(L,W, H) = (0.8*L, 10, H - h) unit: mm

## Box6 = Position + Size

Position(X,Y,Z) = (-0.4*L, W/2, - H)
Size(L,W, H) = (0.8*L, 10, H - h) unit: mm

The memory location includes the following information on how to generate target points, including a position and an orientation, based the geometric parameters:

## V3Orientation = (0, 180°, 0)

$$Target\_Entry = ([-L/2, 0, H/3], V3Orientation, \{-1, 0, -1, 0\})$$

$$Target\_Transition = ([-L/4, 0, H/5], V3Orientation, \{-1, 0, -1, 0\})$$

$$Target\_Execute = ([-L/2, 0, 0.05], V3Orientation, \{-1, 0, -1, 0\})$$

The orientations of the targets are fixed and the position depends on the parameters.

The memory location includes the following information on the rules for forming a path for the conveyor workstation:

Enter path:

Target_Entry
Target_Transition

Execute Path:

Target_Transition
Target_Execute
Target_Transition

Exit Path

Target_Transition
Target_Entry

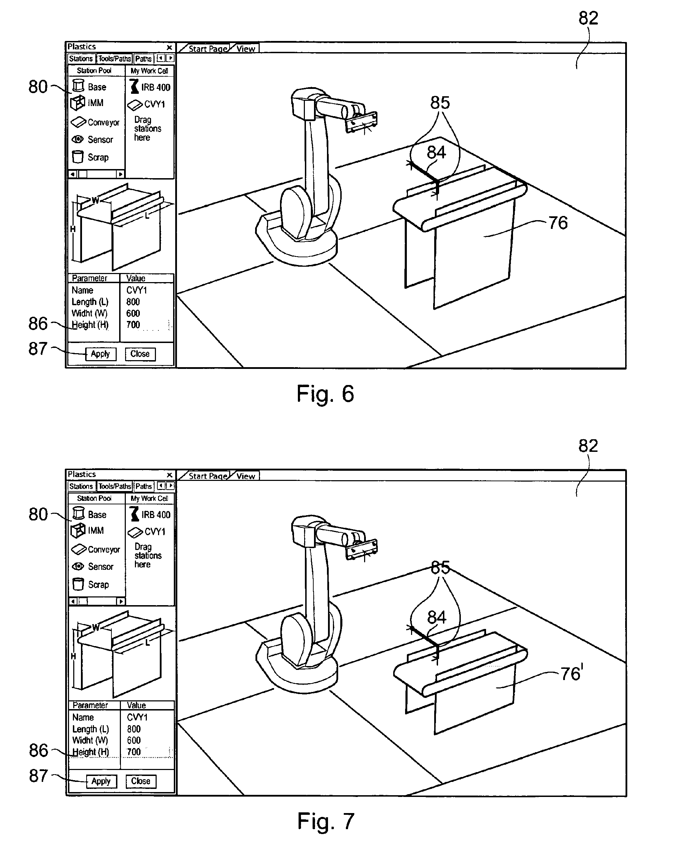

Figure 6 shows an example of a 3D virtual work cell 82 including a conveyer 76. Some of the workstations types, which are possible to select, are shown in a station pool 80. A station can be added to the work cell simply by dragging its icon from the station pool to the 3D view of the work cell 82. If the user drags an icon from the station pool to the 3D view, a 3D model of that workstation type will be created with default parameters. If the parameters do not meet the customers requirement, he can modify it as he want to. Currently used parameters for the conveyer 3D model are displayed at a parameter-editing field 86. In this example, the length L is 800, the width W is 600 and the height H is 700. A parameter indicator is displayed to explain the meaning of each parameter. The user can change the values of the parameters by simply editing the displayed values. The 3D model is updated after the parameters have been changed. When a 3D model is created, the default targets and paths are created at a same time based on the type of the station.

In order to up update the 3D model, targets and path, after the parameters for the conveyer have been modified, the user clicks on an apply button 87. Then the new set of parameters for the conveyer will be applied, hence the 3D model and the associated targets and paths will be updated. The geometric model 76 for the conveyer and the generated path 84, including the target points 85, are displayed, as shown in the figure. The path 84 is the path, which the robot will follow, when it enters the conveyer, releases the part on the conveyer, and leaves the conveyer.

Figure 7 shows the same work cell when a user has changed one of the parameters of the conveyer. In this example, the height H of the conveyer is reduced to 300. Accordingly, the height of the displayed conveyer 76 is reduced. Due to the change of the height of the conveyer, the target points are recalculated to adapt to the new dimensions of the conveyer.

When the height of the conveyer is reduced, the path is moved downwards. As shown in the figures, the path 84 keeps its relative position to the conveyer when the dimensions of the conveyer are changed.

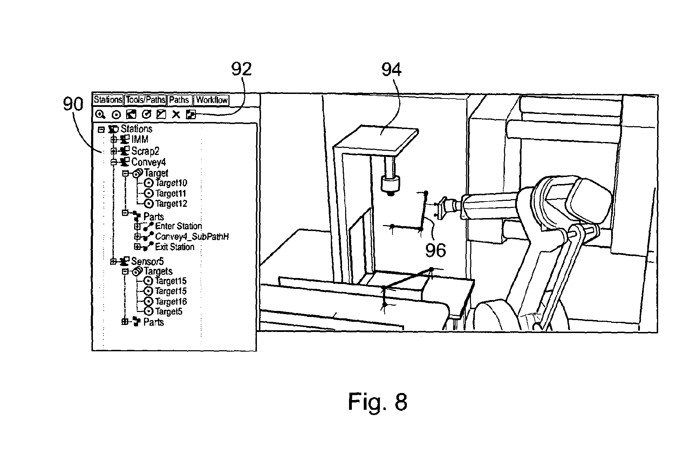

Figure 8 shows a target and path field 90 where it is possible to view all the targets and paths for all workstations in the work cell. If an "autoconfig work cell" button 92 is pressed, the robot configurations will be automatically chosen for all robot targets within the cell. The 3D view shows a 3D model of a sensor station 94 and a path 96 to be followed by the robot when entering and leaving the sensor station.

## EP 1 842 631 B1

**Claims**

1. An apparatus for automatic path generation for an industrial robot working in a work cell including one or more workstations and the robot is visiting and performing work on the workstations, the apparatus including a graphical display device (1) and user input means (2) for entering data to the apparatus, **characterized in that** the apparatus comprises:

   - a memory location (4) for storing a set of predefined workstation types, each workstation type including at least one predefined movement path including two or more target points, information on how to generate said target points based one or more geometric parameters of the workstation, and information on how to generate a parameter driven 3D geometric model of the workstation type based on said geometric parameters, whereby said target points are specified in relation to the geometric model of the workstation.
   - a graphical generator (8) adapted to generate a graphical user interface on said display device, displaying information about the predefined workstation types including said geometric parameters and allowing a user to select one or more workstations based on the predefined workstation types and to enter values for said geometric parameters for the selected workstations,
   - a geometric model generator (18) adapted to generate 3D geometric models for the selected workstations based on the workstation type and values of said geometric parameters,
   - a target generating module (10) adapted to calculate the positions of the predefined target points of the selected workstations based on the workstation type and values of said geometric parameters, and
   - a path generating module (12) adapted to generate paths for the selected workstations based on the workstation type and the calculated positions of the target points.

2. The apparatus according to claim 1, wherein said graphical user interface is adapted to allow a user to change the values of said geometric parameters, and said geometric model generator (18) is adapted to generate new updated 3D geometric models, said target generating module (10) is adapted to generate new updated target points, and said path generating module (12) is adapted to generate new updated paths upon change of any of the geometric parameters.

3. The apparatus according to claim 1 or 2, wherein said graphical generator (8) is adapted to

   - generate a view including graphical representations of said selected workstations based on the generated 3D geometric models,
   - generate graphical representations of said generated paths, and their positions relative to the workstations, and
   - display the view on said graphical display device.

4. The apparatus according to any of the previous claims, wherein the apparatus further comprises a simulator unit (14) adapted to simulate the movements of the robot in the work cell based on said generated paths and said graphical generator is adapted to display the simulated robot movements on said graphical display device.

5. The apparatus according to any of the previous claims, wherein the apparatus comprises a robot program generator (16) adapted to generate a robot program for performing work in the work cell based on said generated paths for the selected workstations.

6. The apparatus according to claim 5, wherein said graphical user interface is adapted to allow a user in a guided way to specify the order in which the robot shall visit the selected workstations and the robot program generator (16) is adapted to generate the robot program based on the order in which the robot shall visit the workstations.

7. The apparatus according to any of the previous claims, wherein said graphical generator (8) is adapted to build up a virtual work cell based on the generated 3D geometric models and to display the virtual work cell on said graphical display device (1).

8. The apparatus according to claim 4 and 7, wherein said graphical generator (8) is adapted to display the robot carrying out the simulated movements in said virtual work cell.

9. The apparatus according to any of the previous claims, wherein said graphical user interface is adapted to allow the user to adjust the position of a workstation relative to the other workstations and said graphical generator (8) is adapted to display the new positions of the workstation and the new positions of the paths of the workstation.

10. The apparatus according to any of the previous claims, wherein said graphical generator (8) is adapted to generate a graphical user interface comprises a wizard for guiding the user to input necessary data.

11. An apparatus according to any of the previous claims, wherein said workstations include a plurality of different types of material handling machines.

12. Use of an apparatus according to any of claims 1-11 for a material handling application.

13. A method for path generation for an industrial robot working in a work cell including one or more workstations and the robot is visiting and performing work on the workstations, wherein the method comprises:

- storing a set of predefined workstation types, each workstation type including at least one predefined movement path including two or more target points, information on how to generate said target points based one or more geometric parameters of the workstation, and information on how to generate a parameter driven 3D geometric model of the workstation type based on said geometric parameters, whereby said target points are specified in relation to the geometric model of the workstation
- displaying information about the predefined workstations including said geometric parameters and allowing a user to select one or more of the predefined workstations and to enter values for said geometric parameters,
- receiving information about which of the predefined workstations the user has selected and values for said geometric parameters,
- generating a 3D geometric model for each of the selected workstations based on the workstation type and values for said geometric parameters,
- calculating the positions of the predefined target points of the selected workstations based on the workstation type and values for said geometric parameters, and
- generating paths for the selected workstations based on the workstation type and the calculated positions of the target points.

14. The method according to claim 13, wherein the method comprises receiving adjusted values of said geometric parameters and generating updated 3D geometric models, updated target points, and updated paths based on the adjusted values.

15. The method according to claim 13 or 14, wherein the method comprises:

- generating a view including graphical representations of said selected workstations based on the generated 3D geometric models, graphical representations of said generated paths, and their positions relative to the workstations, and
- displaying the view on said graphical display device.

16. The method according any of the claims 13 - 15, wherein the method comprises simulating the movements of the robot in the work cell based on said generated paths and displaying the simulated robot movements.

17. The method according to any of claims 13-16, wherein the method comprises generating a robot program for performing work in the work cell based on said generated paths for the selected workstations.

18. The method according to claim 17, wherein the method comprises receiving information about the order in which the robot shall visit the selected workstations, and the robot program is generated based on the order in which the robot shall visit the workstations.

19. The method according to any of claims 13-18, wherein the method further comprises building up a virtual work cell based on the generated 3D geometric models and displaying the virtual work cell on said graphical display device.

20. The method according to claim 16 and 19, wherein the robot is displayed carrying out the simulated movements in said virtual work cell.

21. The method according to any of claims 13-20, wherein the method comprises receiving information from the user on selected positions for the workstations, generating target points and paths based on the positions of the workstations.

22. A computer program product directly loadable into the internal memory of a computer, comprising software for performing the steps of any of the claims 13-21.

23. A computer readable medium, having a program recorded thereon, where the program is to make a computer perform the steps of any of the claims 13-21, when said program is run on the computer.

**Patentansprüche**

1. Einrichtung zur automatischen Bahnerzeugung für einen Industrieroboter, der in einer Arbeitszelle arbeitet, die eine oder mehrere Arbeitsstationen einschließt, wobei der Roboter die Arbeitsstationen aufsucht und dort Arbeiten ausführt, wobei die Einrichtung eine graphische Anzeigevorrichtung (1) und Benutzereingabemittel (2) zum Eingeben von Daten in die Einrichtung aufweist, **dadurch gekennzeichnet, dass** die Einrichtung aufweist:

   - einen Speicherplatz (4) zum Speichern einer Reihe von vorbestimmten Arbeitsstationsarten, wobei jede Arbeitsstationsart mindestens eine vorbestimmte Bewegungsbahn die zwei oder mehr Zielpunkte einschließt, Informationen darüber, wie die Zielpunkte auf Grundlage eines oder mehrerer geometrischer Parameter der Arbeitsstation erzeugt werden, und Informationen darüber, wie ein parametergesteuertes geometrisches 3D-Modell der Arbeitsstationsart auf Grundlage der geometrischen Parameter erzeugt wird, umfasst,

   wobei die Zielpunkte in Bezug auf das geometrische Modell der Arbeitsstation spezifiziert werden,

   - einen Graphikgenerator (8), der dazu geeignet ist, eine graphische Benutzeroberfläche auf der Anzeigevorrichtung zu erzeugen, die Informationen über die vorbestimmten Arbeitsstationsarten einschließlich der geometrischen Parameter anzeigt und es einem Benutzer ermöglicht, auf Grundlage der vorbestimmten Arbeitsstationsarten eine oder mehrere Arbeitsstationen zu wählen und Werte für die geometrischen Parameter für die ausgewählten Arbeitsstationen einzugeben,
   - einen Generator für ein geometrisches Modell (18), der dazu geeignet ist, auf Grundlage der Arbeitsstationsart und der Werte der geometrischen Parameter geometrische 3D-Modelle für die ausgewählten Arbeitsstationen zu erzeugen,
   - ein zielgenerierendes Modul (10), das dazu geeignet ist, die Positionen der vorbestimmten Zielpunkte der ausgewählten Arbeitsstationen auf Grundlage der Arbeitsstationsart und der Werte der geometrischen Parameter zu berechnen, und
   - ein bahngenerierendes Modul (12), das dazu geeignet ist, auf Grundlage der Arbeitsstationsart und der berechneten Positionen der Zielpunkte Bahnen für die ausgewählten Arbeitsstationen zu erzeugen.

2. Einrichtung nach Anspruch 1, wobei die graphische Benutzeroberfläche dazu geeignet ist, es einem Benutzer zu ermöglichen, die Werte der geometrischen Parameter zu ändern, und wobei der ein geometrisches Modell erzeugende Generator (18) dazu geeignet ist, neue aktualisierte geometrische 3D-Modelle zu erzeugen, das zielgenerierende Modul (10) dazu geeignet ist, neue aktualisierte Zielpunkte zu erzeugen, und das bahngenerierende Modul (12) dazu geeignet ist, bei Änderung eines der geometrischen Parameter neue aktualisierte Bahnen zu erzeugen.

3. Einrichtung nach Anspruch 1 oder 2, wobei der Graphikgenerator (8) dazu geeignet ist,

   - eine Ansicht zu erzeugen, die graphische Darstellungen der ausgewählten Arbeitsstationen auf Grundlage des erzeugten geometrischen 3D-Modells einschließt,
   - graphische Darstellungen der erzeugten Bahnen und ihre Positionen relativ zu den Arbeitsstationen zu erzeugen, und
   - die Ansicht auf der graphischen Anzeigevorrichtung anzuzeigen.

4. Einrichtung nach einem der vorhergehenden Ansprüche, wobei die Einrichtung ferner eine Simulatoreinheit (14) aufweist, die dazu geeignet ist, die Bewegungen des Roboters in der Arbeitszelle auf Grundlage der erzeugten Bahnen zu simulieren, und wobei der Graphikgenerator dazu geeignet ist, die simulierten Roboterbewegungen auf der graphischen Anzeigevorrichtung anzuzeigen.

5. Einrichtung nach einem der vorhergehenden Ansprüche, wobei die Einrichtung einen Roboterprogrammgenerator (16) aufweist, der dazu geeignet ist, auf Grundlage der erzeugten Bahnen für die ausgewählten Arbeitsstationen ein Roboterprogramm zur Ausführung von Arbeiten in der Arbeitszelle zu erzeugen.

**6.** Einrichtung nach Anspruch 5, wobei die graphische Benutzeroberfläche dazu geeignet ist, es einem Benutzer zu ermöglichen, auf geführte Weise die Reihenfolge, in der der Roboter die ausgewählten Arbeitsstationen aufsuchen soll, festzulegen, und wobei der Roboterprogrammgenerator (16) dazu geeignet ist, das Roboterprogramm auf Grundlage der Reihenfolge, in der der Roboter die Arbeitsstationen aufsuchen soll, zu erzeugen.

**7.** Einrichtung nach einem der vorhergehenden Ansprüche, wobei der Graphikgenerator (8) dazu geeignet ist, auf Grundlage der erzeugten geometrischen 3D-Modelle eine virtuelle Arbeitszelle zu erstellen und die virtuelle Arbeitszelle auf der graphischen Anzeigevorrichtung (1) anzuzeigen.

**8.** Einrichtung nach Anspruch 4 und 7, wobei der Graphikgenerator (8) dazu geeignet ist, anzuzeigen, wie der Roboter die simulierten Bewegungen in der virtuellen Arbeitszelle ausführt.

**9.** Einrichtung nach einem der vorhergehenden Ansprüche, wobei die graphische Benutzeroberfläche dazu geeignet ist, es dem Benutzer zu ermöglichen, die Position einer Arbeitsstation relativ zu den anderen Arbeitsstationen einzustellen, und wobei der Graphikgenerator (8) dazu geeignet ist, die neuen Positionen der Arbeitsstation und die neuen Positionen der Bahnen der Arbeitsstation anzuzeigen.

**10.** Einrichtung nach einem der vorhergehenden Ansprüche, wobei der Graphikgenerator (8) dazu geeignet ist, eine graphische Benutzeroberfläche zu erzeugen und einen Assistenten zum Führen des Benutzers bei der Eingabe der erforderlichen Daten aufweist.

**11.** Einrichtung nach einem der vorhergehenden Ansprüche, wobei die Arbeitsstationen eine Vielzahl von verschiedenen Arten von Beschickungsmaschinen umfassen.

**12.** Verwendung einer Einrichtung nach einem der Ansprüche 1 - 11 für eine Beschickungsanwendung.

**13.** Verfahren zur Bahnerzeugung für einen Industrieroboter, der in einer Arbeitszelle arbeitet, die eine oder mehrere Arbeitsstationen einschließt, wobei der Roboter die Arbeitsstationen aufsucht und dort Arbeiten ausführt, wobei das Verfahren aufweist:

- Speichern einer Reihe von vorbestimmten Arbeitsstationsarten, wobei jede Arbeitsstationsart mindestens eine vorbestimmte Bewegungsbahn, die zwei oder mehr Zielpunkte einschließt, Informationen darüber, wie die Zielpunkte auf Grundlage eines oder mehrerer geometrischer Parameter der Arbeitsstation erzeugt werden, und Informationen darüber, wie ein parametergesteuertes geometrisches 3D-Modell der Arbeitsstationsart auf Grundlage der geometrischen Parameter erzeugt wird, umfasst,

wobei die Zielpunkte in Bezug auf das geometrische Modell der Arbeitsstation spezifiziert werden,

- Anzeigen von Informationen über die vorbestimmten Arbeitsstationen, einschließlich der geometrischen Parameter, und Ermöglichen für einen Benutzer, eine oder mehrere der vorbestimmten Arbeitsstationen zu wählen und Werte für die geometrischen Parameter einzugeben,
- Empfangen von Informationen darüber, welche der vorbestimmten Arbeitsstationen der Benutzer gewählt hat und über Werte für die geometrischen Parameter,
- Erzeugen eines geometrischen 3D-Modells für jede der ausgewählten Arbeitsstationen auf Grundlage der Arbeitsstationsart und der Werte für die geometrischen Parameter,
- Berechnen der Positionen der vorbestimmten Zielpunkte der ausgewählten Arbeitsstationen auf Grundlage der Arbeitsstationsart und der Werte für die geometrischen Parameter, und
- Erzeugen von Bahnen für die ausgewählten Arbeitsstationen auf Grundlage der Arbeitsstationsart und der berechneten Positionen der Zielpunkte.

**14.** Verfahren nach Anspruch 13, wobei das Verfahren das Empfangen von eingestellten Werten der geometrischen Parameter und das Erzeugen von aktualisierten geometrischen 3D-Modellen, aktualisierten Zielpunkten und aktualisierten Bahnen auf Grundlage der eingestellten Werte aufweist.

**15.** Verfahren nach Anspruch 13 oder 14, wobei das Verfahren aufweist:

- Erzeugen einer Ansicht, einschließend graphische Darstellungen der ausgewählten Arbeitsstationen auf Grundlage der erzeugten geometrischen 3D-Modelle, graphische Darstellungen der erzeugten Bahnen und ihrer Positionen relativ zu den Arbeitsstationen, und
- Anzeigen der Ansicht auf der graphischen Anzeigevorrichtung.

16. Verfahren nach einem der Ansprüche 13 - 15, wobei das Verfahren das Simulieren der Bewegungen des Roboters in der Arbeitszelle auf Grundlage der erzeugten Bahnen und das Anzeigen der simulierten Roboterbewegungen aufweist.

17. Verfahren nach einem der Ansprüche 13 - 16, wobei das Verfahren das Erzeugen eines Roboterprogramms zur Ausführung von Arbeiten in der Arbeitszelle auf Grundlage der erzeugten Bahnen für die ausgewählten Arbeitsstationen aufweist.

18. Verfahren nach Anspruch 17, wobei das Verfahren das Empfangen von Informationen über die Reihenfolge, in der der Roboter die ausgewählten Arbeitsstationen aufsuchen soll, aufweist, und das Roboterprogramm auf Grundlage der Reihenfolge, in der der Roboter die Arbeitsstationen aufsuchen soll, erzeugt wird.

19. Verfahren nach einem der Ansprüche 13 - 18, wobei das Verfahren ferner das Erstellen einer virtuellen Arbeitszelle auf Grundlage der erzeugten geometrischen 3D-Modelle und das Anzeigen der virtuellen Arbeitszelle auf der graphischen Anzeigevorrichtung aufweist.

20. Verfahren nach Anspruch 16 und 19, wobei angezeigt wird, wie der Roboter die simulierten Bewegungen in der virtuellen Arbeitszelle ausführt.

21. Verfahren nach einem der Ansprüche 13 - 20, wobei das Verfahren das Empfangen von Informationen von dem Benutzer über ausgewählte Positionen für die Arbeitsstationen, und das Erzeugen von Zielpunkten und Bahnen auf Grundlage der Positionen der Arbeitsstationen aufweist.

22. Computerprogrammprodukt, das unmittelbar in den internen Speicher eines Computers geladen werden kann, aufweisend Software zum Durchführen der Schritte nach einem der Ansprüche 13 - 21.

23. Maschinenlesbares Medium, in dem ein Programm verzeichnet ist, wobei das Programm den Computer veranlassen soll, die Schritte nach einem der Ansprüche 13 - 21 durchzuführen, wenn das Programm auf dem Computer läuft.

**Revendications**

1. Appareil pour la génération automatique d'une trajectoire pour un robot industriel travaillant dans une cellule de travail comprenant une ou plusieurs stations de travail et le robot visitant et effectuant un travail sur les stations de travail, l'appareil comprenant un dispositif d'affichage graphique (1) et un moyen d'entrée utilisateur (2) pour entrer des données dans l'appareil, **caractérisé par le fait que** l'appareil comprend :

- un emplacement mémoire (4) pour stocker un ensemble de types de station de travail prédéfinis, chaque type de station de travail comprenant au moins une trajectoire de mouvement prédéfinie comprenant deux points cibles ou davantage, des informations sur la manière dont générer lesdits points cibles sur la base d'un ou de plusieurs paramètres géométriques de la station de travail et des informations sur la manière dont générer un modèle géométrique 3D commandé par paramètres du type de station de travail sur la base desdits paramètres géométriques, ce par quoi lesdits points cibles sont spécifiés par rapport au modèle géométrique de la station de travail ;
- un générateur graphique (8) apte à générer une interface graphique utilisateur sur ledit dispositif d'affichage, affichant des informations sur les types de station de travail prédéfinis comprenant lesdits paramètres géométriques et permettant à un utilisateur de sélectionner une ou plusieurs stations de travail sur la base des types de station de travail prédéfinis et d'entrer des valeurs pour lesdits paramètres géométriques et pour les stations de travail sélectionnées ;
- un générateur de modèles géométriques (18) apte à générer des modèles géométriques 3D pour les stations de travail sélectionnées sur la base du type de station de travail et des valeurs desdits paramètres géométriques ;
- un module générateur de cibles (10), apte à calculer les positions des points cibles prédéfinis des stations de travail sélectionnées sur la base du type de station de travail et des valeurs desdits paramètres géométriques ; et
- un module générateur de trajectoires (12), apte à générer des trajectoires pour les stations de travail sélectionnées sur la base du type de station de travail et des positions calculées des points cibles.

**2.** Appareil selon la revendication 1, dans lequel ladite interface graphique utilisateur est apte à permettre à un utilisateur de changer les valeurs desdits paramètres géométriques, et ledit générateur de modèles géométriques (18) est apte à générer de nouveaux modèles géométriques 3D mis à jour, ledit module générateur de cibles (10) est apte à générer de nouveaux points cibles mis à jour, et ledit module générateur de trajectoires (12) est apte à générer de nouvelles trajectoires mises à jour lors du changement de l'un quelconque des paramètres géométriques.

**3.** Appareil selon l'une des revendications 1 ou 2, dans lequel ledit générateur graphique (8) est apte à :

- générer une vue comprenant des représentations graphiques desdites stations de travail sélectionnées sur la base des modèles géométriques 3D générés ;
- générer des représentations graphiques desdites trajectoires générées et leurs positions par rapport aux stations de travail ; et
- afficher la vue sur ledit dispositif d'affichage graphique.

**4.** Appareil selon l'une quelconque des revendications précédentes, dans lequel l'appareil comprend en outre une unité de simulateur (14) apte à simuler les mouvements du robot dans la cellule de travail sur la base desdites trajectoires générées et ledit générateur graphique est apte à afficher les mouvements de robot simulés sur ledit dispositif d'affichage graphique.

**5.** Appareil selon l'une quelconque des revendications précédentes, dans lequel l'appareil comprend un générateur de programme de robot (16), apte à générer un programme de robot pour effectuer des travaux dans la cellule de travail sur la base desdites trajectoires générées pour les stations de travail sélectionnées.

**6.** Appareil selon la revendication 5, dans lequel ladite interface utilisateur graphique est apte à permettre à un utilisateur d'une manière guidée de spécifier l'ordre dans lequel le robot devra visiter les stations de travail sélectionnées et le générateur de programme de robot (16) est apte à générer le programme de robot sur la base de l'ordre dans lequel le robot devra visiter les stations de travail.

**7.** Appareil selon l'une quelconque des revendications précédentes, dans lequel ledit générateur graphique (8) est apte à construire une cellule de travail virtuelle sur la base des modèles géométriques 3D générés et à afficher la cellule de travail virtuelle sur ledit dispositif d'affichage graphique (1).

**8.** Appareil selon l'une des revendications 4 et 7, dans lequel ledit générateur graphique (8) est apte à afficher le robot effectuant les mouvements simulés dans ladite cellule de travail virtuelle.

**9.** Appareil selon l'une quelconque des revendications précédentes, dans lequel ladite interface graphique utilisateur est apte à permettre à l'utilisateur d'ajuster la position d'une station de travail par rapport aux autres stations de travail et ledit générateur graphique (8) est apte à afficher les nouvelles positions de la station de travail et les nouvelles positions des trajectoires de la station de travail.

**10.** Appareil selon l'une quelconque des revendications précédentes, dans lequel ledit générateur graphique (8) apte à générer une interface graphique utilisateur comprend un assistant intelligent pour guider l'utilisateur pour entrer les données nécessaires.

**11.** Appareil selon l'une quelconque des revendications précédentes, dans lequel lesdites stations de travail comprennent une pluralité de différents types de machines de manipulation du matériel.

**12.** Utilisation d'un appareil tel que défini à l'une quelconque des revendications 1 à 11 pour une application de manipulation de matériel.

**13.** Procédé pour une génération de trajectoires pour un robot industriel travaillant dans une cellule de travail comprenant une ou plusieurs stations de travail et le robot visitant et effectuant un travail sur les stations de travail, dans lequel le procédé comprend les opérations consistant à :

- stocker un ensemble de types de station de travail prédéfinis, chaque type de station de travail comprenant au moins une trajectoire de mouvement prédéfinie comprenant deux points cibles ou davantage, des informations sur la manière dont générer lesdits points cibles sur la base d'un ou plusieurs paramètres géométriques de la station de travail, et des informations sur la manière dont générer un modèle géométrique 3D commandé par paramètres du type de station de travail sur la base desdits paramètres géométriques, ce par quoi lesdits points cibles sont spécifiés par rapport au modèle géométrique de la station de travail ;

- afficher des informations sur les stations de travail prédéfinies comprenant lesdits paramètres géométriques et amenant un utilisateur à sélectionner une ou plusieurs des stations de travail prédéfinies et à entrer des valeurs pour lesdits paramètres géométriques ;
- recevoir des informations concernant lesquelles des stations de travail prédéfinies l'utilisateur a sélectionnées et les valeurs pour lesdits paramètres géométriques ;
- générer un modèle géométrique 3D pour chacune des stations de travail sélectionnées sur la base du type de station de travail et des valeurs pour lesdits paramètres géométriques ;
- calculer les positions des points cibles prédéfinis des stations de travail sélectionnées sur la base du type de station de travail et des valeurs pour lesdits paramètres géométriques : et
- générer des trajectoires pour les stations de travail sélectionnées sur la base du type de station de travail et des positions calculées des points cibles.

14. Procédé selon la revendication 13, dans lequel le procédé comprend la réception des valeurs ajustées desdits paramètres géométriques et la génération de modèles géométriques 3D mis à jour, des points cibles mis à jour et des trajectoires mises à jour sur la base des valeurs ajustées.

15. Procédé selon l'une des revendications 13 ou 14, dans lequel le procédé comprend les opérations consistant :

- générer une vue comprenant des représentations graphiques desdites stations de travail sélectionnées sur la base des modèles géométriques 3D générés, des représentations graphiques desdites trajectoires générées et de leurs positions par rapport aux stations de travail ; et
- afficher la vue sur ledit dispositif d'affichage graphique.

16. Procédé selon l'une quelconque des revendications 13 à 15, dans lequel le procédé comprend la simulation des mouvements du robot dans la cellule de travail sur la base desdites trajectoires générées et l'affichage des mouvements de robot simulés.

17. Procédé selon l'une quelconque des revendications 13 à 16, dans lequel le procédé comprend la génération d'un programme de robot pour effectuer un travail dans la cellule de travail sur la base desdites trajectoires générées pour les stations de travail sélectionnées.

18. Procédé selon la revendication 17, dans lequel le procédé comprend la réception d'informations sur l'ordre dans lequel le robot devra visiter les stations de travail sélectionnées, et le programme de robot est généré sur la base de l'ordre dans lequel le robot devra visiter les stations de travail.

19. Procédé selon l'une quelconque des revendications 13 à 18, dans lequel le procédé comprend en outre la construction d'une cellule de travail virtuelle sur la base des modèles géométriques 3D générés et l'affichage de la cellule de travail virtuelle sur ledit dispositif d'affichage graphique.

20. Procédé selon les revendications 16 à 19, dans lequel le robot est affiché effectuant les mouvements simulés dans ladite cellule de travail virtuelle.

21. Procédé selon l'une quelconque des revendications 13 à 20, dans lequel le procédé comprend la réception d'informations provenant de l'utilisateur sur des positions sélectionnées pour les stations de travail, la génération des points cibles et des trajectoires sur la base des positions des stations de travail.

22. Produit de programme d'ordinateur pouvant être directement chargé dans la mémoire interne d'un ordinateur, comprenant un logiciel pour effectuer les étapes telles que définies à l'une quelconque des revendications 13 à 21.

23. Support pouvant être lu par un ordinateur ayant un programme enregistré sur celui-ci, où le programme doit effectuer une mise en oeuvre par ordinateur des étapes telles que définies à l'une quelconque des revendications 13 à 21, lorsque ledit programme est exécuté sur l'ordinateur.

Fig. 1

```
                    ┌─────────┐
                   (   Start   )
                    └────┬────┘
                         ▼
           ┌──────────────────────────┐
           │   Choose robot type      │───30
           └─────────────┬────────────┘
                         ▼
           ┌──────────────────────────┐
           │   Choose main            │───32
           │   workstation type       │
           └─────────────┬────────────┘
                         ▼
           ┌──────────────────────────┐
           │   Select position of     │───34
           │   main workstation       │
           └─────────────┬────────────┘
                         ▼
           ┌──────────────────────────┐
           │   Set parameters for     │───36
           │   the workstation        │
           └─────────────┬────────────┘
                         ▼
           ┌──────────────────────────┐
           │ Select workstations.     │───38
           │ Set parameters for the   │
           │ selected workstations    │
           └─────────────┬────────────┘
                         ▼
           ┌──────────────────────────┐
           │   Define work flow       │───40
           └─────────────┬────────────┘
                         ▼
           ┌──────────────────────────┐
           │   Create 3D              │───41
           │   geometrical models     │
           └─────────────┬────────────┘
                         ▼
           ┌──────────────────────────┐
           │   Build up virtual       │───42
           │   work cell              │
           └─────────────┬────────────┘
                         ▼
                     ┌───────┐
                    (    B    )
                     └───────┘
```

Fig. 2a

```
                    ( B )
                      │
                      ▼
        ┌──────────────────────┐
        │ Calculate target     │─── 43
        │ points               │
        └──────────────────────┘
                      │
                      ▼
        ┌──────────────────────┐
        │ Organize target      │─── 44
        │ points as paths      │
        └──────────────────────┘
                      │
                      ▼
        ┌──────────────────────┐
        │ Choose robot         │─── 46
        │ configurations       │
        └──────────────────────┘
                      │
                      ▼
        ┌──────────────────────┐
        │ Verify reachability  │─── 48
        └──────────────────────┘
                      │                                    50
                      ▼                                     │
                   ◇ All                  ┌─────────────────────────┐
                  target points  ── No ──▶│ Adjust position of      │
                   reachable?             │ workstation and/or      │──▶
                     ◇                    │ parameters              │
                      │ Yes               └─────────────────────────┘
                      ▼
        ┌──────────────────────┐
        │ Set up and run       │─── 56
        │ simulation           │
        └──────────────────────┘
                      │                                    58
                      ▼                                     │
                   ◇                      ┌─────────────────────────┐
                 Satisfied    ── No ──────▶│ Adjust parameters       │
                   ◇                      │ and/or position of      │
                      │ Yes               │ workstation             │
                      ▼                   └─────────────────────────┘
        ┌──────────────────────┐
        │ Create robot         │─── 60
        │ program              │
        └──────────────────────┘
                      │
                      ▼
                  (  Stop  )
```

Fig. 2b

**Fig. 3**

**Fig. 4**

**Fig. 5**

Fig. 6

Fig. 7

90

92

94

Stations | Tools/Paths | Paths | Workflow

Stations
  IMM
  Scrap2
  Convey4
    Target
      Target10
      Target11
      Target12
    Parts
      Enter Station
      Convey4_SubPathH
      Exit Station
  Sensor5
    Targets
      Target15
      Target15
      Target16
      Target5
    Parts

96

Fig. 8

23

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6292715 B1
- SE 2005001676 W
- SE 2005001512 W